# EUROPEAN PATENT SPECIFICATION

(11) **EP 2 798 442 B1**
(45) Date of publication and mention of the grant of the patent: **08.08.2018**
(21) Application number: 11878679.7
(22) Date of filing: 30.12.2011
(51) Int. Cl.: G06F 3/042, G06F 3/0488, G06K 9/62, G06K 9/68

(54) **INTERACTIVE DRAWING RECOGNITION USING STATUS DETERMINATION**
INTERAKTIVE ZEICHNUNGSERKENNUNG MITTELS STATUSBESTIMMUNG
RECONNAISSANCE DE DESSIN INTERACTIVE UTILISANT UNE DÉTERMINATION D'ÉTAT

(43) Date of publication of application: 05.11.2014
(73) Proprietor: Intel Corporation, Santa Clara, CA 95054 (US)
(72) Inventor: ANDERSON, Glen, J., Beaverton, Oregon 97006 (US); BOOTH, Cory, J., Beaverton, Oregon 97007 (US)
(74) Representative: Goddar, Heinz J.
(86) International application number: PCT/US2011/068222
(87) International publication number: WO 2013/101221

(56) References cited:
- EP-A1- 0 844 552
- JP-A- H11 305 895
- US-A- 6 118 897
- US-A1- 2003 174 125
- US-A1- 2004 100 508
- US-A1- 2006 018 546
- US-A1- 2007 052 685
- US-A1- 2007 257 938
- US-A1- 2010 131 549

## Description

### BACKGROUND

Computing systems often rely on mouse and keyboard inputs to determine the appearance of digital objects that the user creates. Keyboard, mouse, and game controller inputs usually determine the behaviors of digital objects. People can draw objects and scan them into computers, allowing some freehand input, but the scanned drawings are then one single object. The user has limited opportunity for how to interact with the object, for example resizing and changing colors. A more natural method of inputting visual information would allow a richer graphical interaction with computing devices.

Tablets have been used as input devices. Typically the tablet senses the pressure of a stylus on a special surface and reproduces the drawn shapes on the screen. Tablets may also be used to modify photographs and drawings and as a pointing device similar to a mouse. In some versions, the pen rather than the drawing surface records the drawn input digitally. These pens use optic sensors and sometimes specially marked paper to sense and store drawings.

Some existing computing systems will recognize drawn objects as simple commands, as alphanumeric characters, or as matching objects in the system. These systems scan the drawing to identify it. However, the nature of these interactions is limited. For example US 2004/100508 A1 teaches that a user captures a digital image of a paper where the user has marked one or several objects or commands with a pen. The marking is done according to a predefined set of marking rules, which eases the separation of objects and commands later on. Examples of rules for marking objects or commands are encircling, underlining and highlighting. The embedded commands in the digital image can be associated with one or several objects in the digital image. The association is done according to a predefined set of association rules. The image is then transmitted to a computing device for processing. The transmission is using a cable, IR or RF technologies like Bluetooth or cellular telephony. The computing device is called "command-server". It identifies and separates objects and commands by analysing the digital image using the predefined set of marking rules. The command-server also identifies, interprets and associates commands with objects by analysing the digital image according to the predefined sets of marking rules and association rules. Finally, the command-server initiates services related to the commands on the objects. Moreover, US 2007/052685 A1 teaches an information processing apparatus which includes an interpretation unit configured to interpret a command written on computerized document data, a creation unit configured to create a graphical user interface component used to perform execution of the command interpreted by the interpretation unit, and a display control unit configured to cause a display apparatus to display document data corresponding to target data that represents a target of the execution and to display the created graphical user interface component at a position corresponding to the command written on the document data. Some existing computing systems will recognize "air gestures" as simple commands, or more commonly as inputs into a computer game. The air gesture may be recognized by being observed by a camera or by the user holding a device that includes inertial sensors and then moving the device.

### BRIEF DESCRIPTION OF THE DRAWINGS

Embodiments of the invention are illustrated by way of example, and not by way of limitation, in the figures of the accompanying drawings in which like reference numerals refer to similar elements.
Figure 1 is a diagram of a user drawing a keypad for use with a computer system according to an embodiment of the invention.
Figure 2 is a diagram of a user drawing a joystick for use with a computer system according to an embodiment of the invention.
Figure 3 is a diagram of a user drawing a keypad for use with a computer system according to another embodiment of the invention.
Figure 4 is a diagram of a user drawing a media player control for use with a computer system according to an embodiment of the invention.
Figure 5A is a diagram of a user drawing virtual objects to virtually launch toward a scene depicted in a computer system according to an embodiment of the invention.
Figure 5B is a diagram of a user drawing a virtual object and virtually picking it up for use with a scene depicted in a computer system according to an embodiment of the invention.
Figure 5C is a diagram of user-drawn virtual objects placed into a scene depicted in a computer system according to an embodiment of the invention.
Figure 6 is a diagram of a user-drawn game surface and physics commands according to an embodiment of the invention.
Figure 7 is a process flow diagram of a computer system interpreting a user drawing according to another embodiment of the invention.
Figure 8 is a block diagram of a computer system suitable for implementing processes of the present disclosure according to an embodiment of the invention.
Figure 9 is a block diagram of a an alternative view of the computer system of Figure 8 suitable for implementing processes of the present disclosure according to an embodiment of the invention.

### DETAILED DESCRIPTION

A system to recognize drawn input in new ways. The drawn input might include, for example: a drawn a numeric keypad used as a keypad; a drawn mouse or "mousing area" used as a point and click device; and a drawn game of "Line Rider" in which lines are drawn freehand and the computer generates a character to ride on the drawn lines; among others.

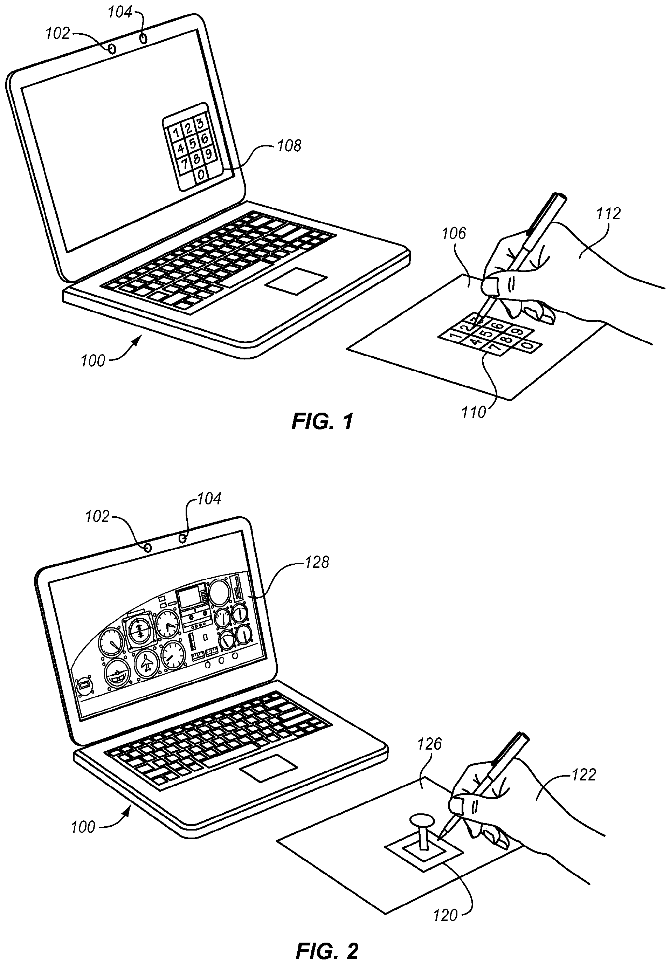

Figure 1 shows an example of computer system suitable for use with embodiments of the present invention. The computer system 100 has a camera 102 and a microphone 104 typically used for voice and video calls. The camera may be a stereo camera for three-dimensional video calls or to allow for the interpretation of three dimensional air gestures. While a notebook style computer is shown, slate and tablet computers typically have similar hardware features. Alternatively a smart phone, smart television, media player, or portable gaming device may be used. A desktop computer may also be used when equipped with cameras and microphones as needed for the various embodiments described below.

In embodiments, the invention may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

A sheet of paper 106 is placed within view of the camera 102. The paper may be on the same desk as shown or on a nearby surface. Instead of a piece of paper, any writing surface may be used such as whiteboard, chalkboard, or an electronic surface such as a display surface that detects drawing input and shows the result on the display. Using the paper or a similar article, a user 112 is able to draw and write any desired words and shapes. In Figure 1, the user has drawn a picture of a keypad 110.

The computer system observes the paper and detects the keypad drawn on the paper. This may be done using any of a variety of handwriting, symbol recognition, and template matching utilities depending on the particular embodiment. The system then tries to identify the drawing.

The recognition that a drawing has been made can provoke the computing system to try to limit the number of different possible items that the drawing represents. In Figure 1, the system can use one or both of two different approaches to make it easier to recognize the drawing. The display of the computing system shows an active foreground window for a calculator program 108. Since the calculator program is active, the computing system can limit the range of possible drawings to those that are relevant to a calculator program. One relevant type of drawing for a calculator program is a number keypad 110 which the user has drawn. While the drawn keypad is very simple for illustration purposes, the user may draw a very complex keypad suitable for scientific or financial calculations. In addition, the user may draw keypads that indicate different styles of data entry. The calculator program or a separate I/O program may have templates to match a wide range of different types of keypads and other drawings that may relate to the calculator program.

Alternatively, or in addition, the computing system may assess its installed hardware. The illustrated computer does not have a numerical keypad. While a notebook computer such as the one shown may include a numerical keypad to the side of the letter portion of the keyboard or it may support an external peripheral keypad, the illustrated example computing system has neither. Accordingly, as the computing system sees that the user has drawn a peripheral device, it may access drawing templates only for the peripheral devices that are not installed, such as number keypads.

Using the active program or the system hardware status or both allows the system to limit a set of templates or shape recognition patterns to those that might correspond to a keypad. This increases the reliability and speed of the drawing recognition. Having then recognized the drawing as a keypad, the user can perform gestures with respect to the drawing of the keypad and enter numbers and characters as if it were a keypad. While a calculator program is shown, any other program may be used. Other applications, such as spreadsheets, tax preparation programs, and expense tracking programs all benefit from dedicated number keypads. For other types of programs, other types of peripherals may be recognized. A video editing program may have templates for sliders and jog wheels, for example.

Figure 2 shows a similar use of the computer system. In the example of Figure 2, the same computer is running a flight simulator or airplane dog fight gaming application as shown by the airplane 128 on the screen. The computing system then observes that the user 122 has drawn an object 120 on a piece of paper 126. The computer system, based on possible drawings for the flight simulator program, is able to recognize the drawn object as most resembling a joystick. Other drawings may also be permissible depending on the game. The flight simulator game may also support radios, positioning instruments, and various levers and switches, including firing and decoy systems, depending on the type of aircraft. Determining that the flight simulator game is the active program allows the computer system to apply templates only for relevant devices to the drawing so that the drawing, even if it does not closely resemble a joystick may be interpreted as such. In the illustrated example, the knob may be seen as having push surfaces and a fire button, for example. The user may then touch the knob and its bezel to have the effect of joystick commands on the computer system.

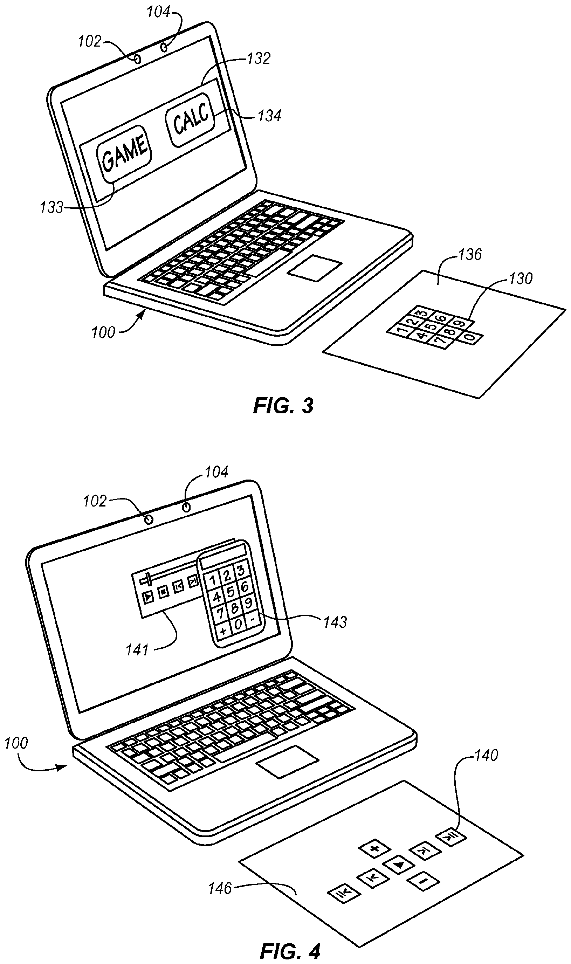

Figure 3 shows another alternative embodiment in which the user 132 applies a different approach to indicating the nature of the drawn object. The user 132 has drawn a keypad 130 on a piece of paper 136, however, instead of the computer determining which program is active, the user selects a program to which the drawing applies. An application selection window 132 has tiles for two applications, a game 133, simply titled "GAME" for purposes of the illustration and a calculator application 134, titled "CALC." The user selects one of the two programs to help the computer to recognize the drawing. The computer receives the selection and applies it to a template selection system to identify a set of templates to apply to a drawing 130 on a sheet of paper 136. While only two applications are shown, the system is typically capable of presenting many more choices. The application may be selected using the trackpad 105 or the keyboard 103 or in any of a variety of other ways, depending on the embodiment.

The selected program provides the computer system with an indication about the nature of the drawn object. The computer system can use this to select a set of templates associated with the calculator application and then recognize the features of the drawing that correspond to features of a suitable peripheral device for a calculator, such as a keypad. This program selection technique may be combined with the hardware status technique described above.

Figure 4 shows a further example of aiding the computer to identify the drawing. In Figure 4, there are two open programs displayed on the screen. The calculator 143 is active and in the foreground. A media player application 141 is running in the background. The user has drawn a set of keys 140 for controlling a media player on a piece of paper 146 in front of the computing system. The keys are placed in a particular common pattern for previous track, rewind, play, fast forward and next track with volume up and down, however a variety of other conventional button layouts may be drawn alternatively. In this example, the computer might first try to match the drawing to templates for the foreground calculator program. Failing that the computer may then try templates for other running programs such as the media player application. Once the computer has observed this drawing and recognized it on the paper 146, then it can assign properties to it and the user can use it to control the media player.

The user may want to use the calculator through a drawing on a piece of paper or an external peripheral and then draw a media player control to adjust the background music as desired. When the user then draws the seven tiles 140, the computer system accesses a template library associated with running programs. This leads to associating the drawn control panel with the media player.

The matching of templates may be made more quickly by the user indicating the running application to which the drawing applies. The user may also set a preference to attempt to first match background application templates instead of templates for applications running in the foreground.

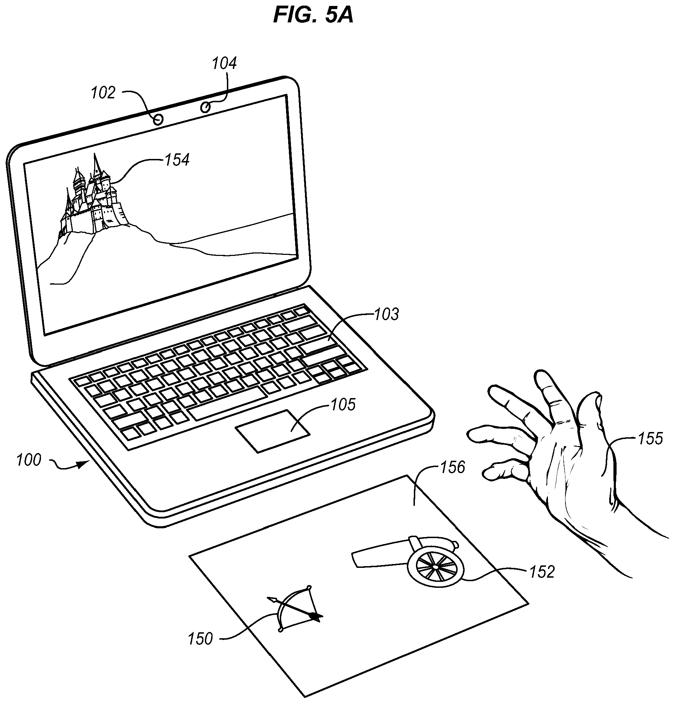

Figure 5A shows a different scenario in which the user 155 is involved in an application that presents a scene on the computer system screen. In this case, the scene has a castle on a hillside overlooking a sea. The user draws arrows 150 and cannons 152 which are interpreted in the context of the foreground application as virtual objects of arrows and cannons. The user is able to virtually lift the arrows and cannons out of the page 156 with his hand 155 and then virtually launch these objects toward the scene on the display. This may be done as a way of attacking the castle or of defending the castle from an outside attack (not shown).

This usage model presents several uses of the paper and of a camera system 102. First, the computer system recognizes the context of the interaction. The system status in this example is that a particular game is running that involves fighting for or against a castle. The same approach may be applied to many different applications. The user in this context draws objects on the paper that the system camera 102 observes and identifies using the approaches described above, for example. The recognition of the objects in this and other contexts shown above may be confirmed for the user by the computing system for example by showing an illustration of the recognized object in the drawing, such as the matched template. In a case of confusion, the system may alternatively ask a user to confirm a choice.

After recognizing the arrows and cannons, the user provides air gestures 152, such as a hand gesture for picking up the drawn object as a virtual object. The hand gesture is observed by the camera 102 and can be recognized using a library of gestures. The recognized gesture may then be used as a command for the launch of arrows, cannonballs, and any other supported weapon toward the castle or some other object in the scene 154.

As a further alternative, the hand 152, instead of gesturing to throw the projectiles, may use the keyboard 103 or trackpad 105 to indicate a command to the computer system. This command may be used in the same way as the picking up and throwing hand gesture command. The particular keyboard or trackpad command may be based on context or a special tool or application may be used to make a selection. For a computing system with additional or different input devices, such as a mouse, a jog wheel, a gamepad or other devices, these input devices may be used instead of or in addition to the keyboard and trackpad shown. A menu system displayed on the computer system display may be used to determine a category for matching drawn objects. For example, the user may choose a game mode. This would allow a drawn joystick to be recognized even when the drawing does not closely resemble a joystick.

The drawing or a supplemental drawing, keyboard, voice or written commands may also be used to endow the drawn object with particular physics properties. Voice commands, drawings, gestures, or touch input may be used in conjunction with the drawn arrows to indicate that the arrows have fiery tips, or to indicate that the arrows are being shot from a compound or conventional bow or that the arrows are sized for long bow, etc. As another example, in the context of a missile, it may be difficult to precisely draw a particular missile. However, the user may draw a generalized missile and then use additional commands to indicate whether and how it is powered, its speed and range, how it finds its target, e.g. heat seeking, radio wave seeking, position guided, remotely aimed, etc, the type of warhead it carries and any other desired parameters supported by the application. All of these characteristics may then be used to determine the physics properties of the arrow, or cannonball, or missile during and after it is launched.

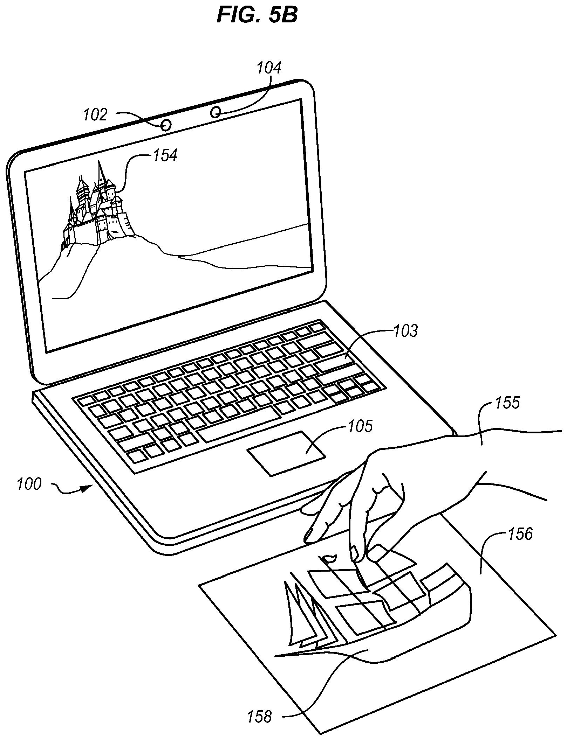

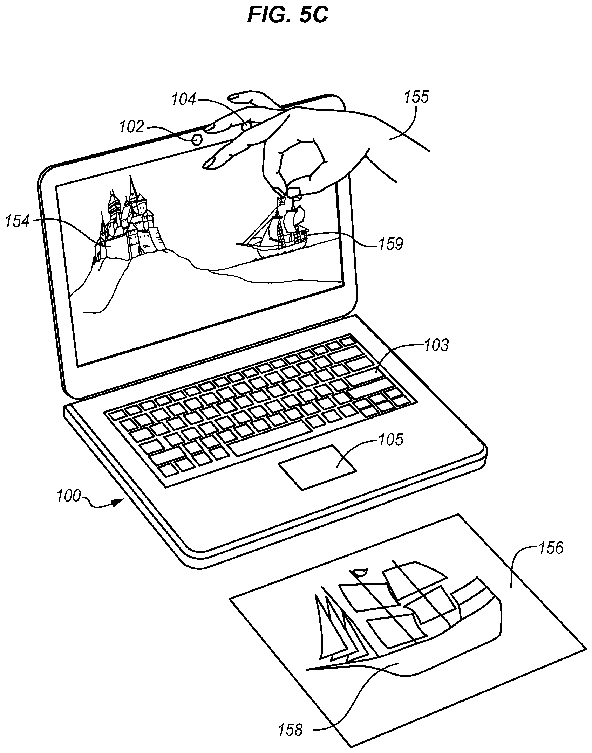

In Figure 5B, the user may draw a different type of object that is not launched at the scene but placed in the scene. In this example, the user 155 draws a ship 158 on the piece of paper. The user may then pick up the ship and place it on the scene presented by the display. As shown in Figure 5C, the user is placing the ship onto the water of the scene. This is observed by the camera 102 and so the system has added the ship to the scene and the scene now includes the ship. Once placed into the scene, the ship may be controlled in any of a variety of different ways, depending on the nature of the application. A similar approach may be applied to games in which objects are constructed, such as buildings, streets, or machinery. The same approach may also be applied to photography, or video editing, as well as to various types of planning applications.

The ship as a drawn object is recognized by the application as a drawing of a ship when it is matched to a template for a ship drawing. The application may confirm the identification as a ship and provide some way to confirm its physical and other characteristics including personnel, provisioning, motive power, and weaponry, for example. The user then indicates by a gesture that it wants to pick the ship up off the paper and place it in the scene. The ship may be represented as a virtual object for its trip from paper to display or not, depending on the particular implementation. Upon being placed in a location on the screen, however, it becomes a rendered object in the scene subject to the same rules as other objects in the rendered scene and surrounding display or game space.

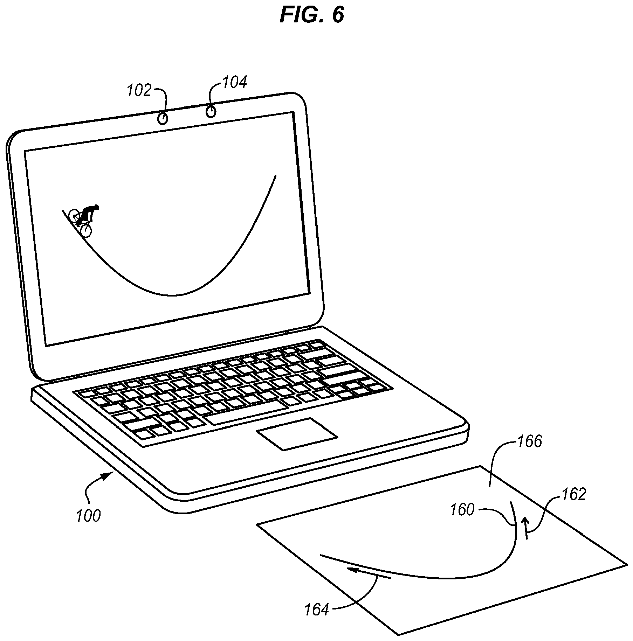

Figure 6 shows another example in which the user is playing a Line Rider game on the computing system. The user has drawn on a piece of paper 166, a curve 160. This curve has been observed by the camera 102 and rendered on the display. Since the active foreground application is a Line Rider game, the drawn object recognizes the line 160 as a line upon which the rider is to ride. The user may draw many lines in sequence for the line rider to ride until an error is made and the rider falls. The user has also drawn a right hand arrow 162 in the direction of travel to indicate forward acceleration and a left hand arrow 164 pointing opposite the direction of travel to indicate reverse acceleration or braking. These arrows may be used to indicate acceleration forces to be applied to the rider. A similar approach may be used to draw symbols representing physics properties of other virtual or rendered objects, such as the ship, arrows or cannonballs referred to above.

The computer status also allows users to adopt a shorthand form for their drawings. In the example of Figures 4 and 5A, the drawings do not precisely look like a real item. However, with the aid of the known hardware or software status or both, the computer system is still able to recognize the drawing. This principle may be extended to other types of drawings. Accordingly, a user may draw a partial keyboard and say "keyboard" and the system may then interpret the drawing as a full keyboard. The user may alternatively, draw a partial mouse and say "mouse" for a similar result. The keyboard or mouse drawn on the paper may then become a virtual 3D object that may be virtually "moved" or manipulated on the computer system display as the user makes gestures toward or actually physically moves the drawing. The virtual input devices may be configured to adapt to a user's change in hand and other positions.

The processes described above may be restated and simplified as follows. The computer determines its status and uses that status as an indication of the type of drawing that the user intends to make. In response to the identified drawing type, the computer system accesses a templates library. The templates will be selected based on the drawing type so that the computer system has a limited set of templates to use.

The computer system then observes the user's drawing. The drawing may be observed through a camera or a touch sensitive surface or in another way. The drawing may be corrected for variations in reflectivity in the drawing, for keystone distortion, for inconsistent line thickness caused by the use of a poor or malfunctioning pen and for other distortions. Using a camera allows the user to use any drawing surface desired while using a known writing surface and pen reduces distortions in the image and errors that might be associated with the camera identifying and observing the drawing. The drawing is compared to the selected templates. If a match is found, then the drawing has been identified.

In the examples above, the drawing is identified as a keypad, joystick, weapon or game piece, however, any of a wide variety of other items may be drawn. Having recognized the drawing, the computer system assigns attributes to the identified drawing. These attributes may be accessible functions, user input capabilities, etc. The attributes may be determined using information associated with the template. Accordingly, if the drawing is matched to a keypad template, the template may include information that touching a particular part of the drawing is assigned to a "9" number key press. The template may include the drawn bounds of the "9" key as a part of the template.

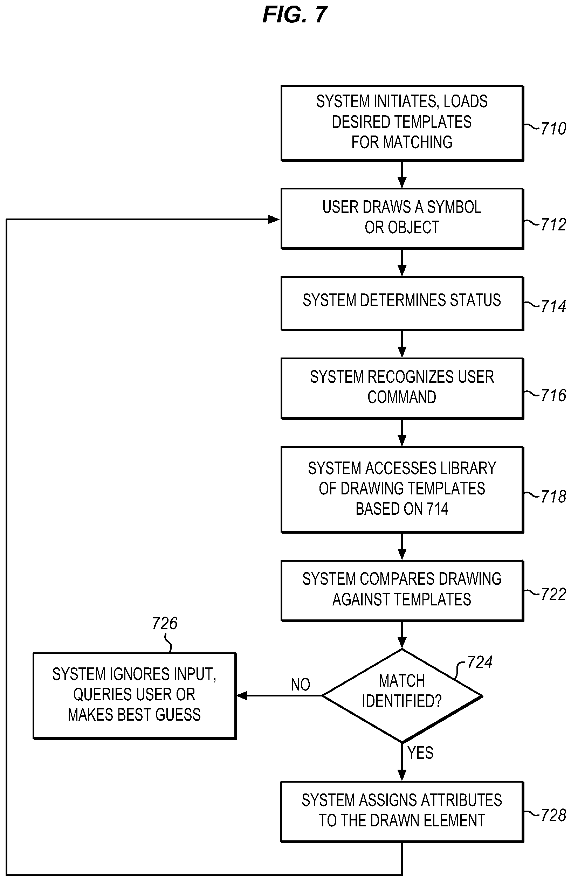

Figure 7 is a process flow diagram of a process that is performed in the usage examples described above. At 710, the computer system initiates and loads any desired templates for matching. These templates may be templates for matching written words, spoken utterances, and air gestures as well as for drawings. The templates may be supplied by an operating system, a separate drawing recognition application, a user that supplies the template, or the templates may be a part of a game or productivity application.

At 712, the user draws a symbol or object, such as the keypad or joystick shown above. The drawing need not precisely match any particular template or prescribed form for such an object.

At 714, the computer system determines its status. As described above the status may be a hardware configuration, such as the presence or absence of installed peripherals, or a software status, such as a foreground or background application running or not. The determined status indicates to the system a type for the drawing which the system can use to reduce the possible choices or even to impose a choice on the system. The two operations of drawing an object at 712 and determining a type for the object at 714 may be performed in any order. The computer system receives both inputs and then acts accordingly.

At 718, the system uses the determined status to access a library of drawing templates that may be applied to the drawing. The drawing may be captured by capturing an image of the drawing using a camera coupled to the computer system. The drawing in the form of a captured image or other digital file is then converted into a digital form that can be matched against other digital files. The form may be a bit map or other image file or it may be an abstracted mathematical representation of the primary features of the user's drawing.

At 722, the computer system compares the observed drawing to the set of drawing templates that it has accessed at 718. This is a limited set of templates based on the determined drawing type at 714. The comparison may be done more quickly because the number of possible templates is greatly reduced. At 724, the system selects a template and it if matches the observed drawing, then at 728, the system assigns attributes to the drawn elements of the drawing. The system cycles through all of the templates and, if no match is identified, then the system takes some other action. It may simply ignore the drawing. At a later time, the system can try to make another match after the user has returned to the drawing to provide more detail or to make corrections to the drawing. The system may also ask the user for assistance by showing some templates to the user for selection or by asking the user to write, say, or type what the object is. For example, the system may query the user by showing two or more possible matches to the drawing and then allowing the user to choose one of the templates as the correct match.

Alternatively, the system may make its best guess and use an approximation of what the user has drawn. The approximation is possible because of the determined drawing type based on the status at 714. As a result, it is possible for the user to be using a flight simulator program and then draw something which does not look exactly like a joystick. The computer system, knowing that the drawing is related to the program, looks for a joystick or other aeronautical instrument, and can then impose a joystick design over the drawing rather than accepting only drawings that are very well done. The computer may assign attributes to each of the five tiles that correspond to joystick attributes. The tiles may be assigned to be buttons, or surfaces, depending on the matched template. In the same way, the squares drawn for the keypad may be assigned attributes of various number pad keys. A larger square on the right may be assigned to be a "+" key, for example, while a square on the bottom may be assigned the "0" key. A vague generalized drawing of five tiles can be seen as joystick buttons or surfaces without looking very much like them.

The process then returns for the next user drawing at 712. The process flow may start over with a completely unrelated drawing. For example a user might draw a joystick in one location on the paper and then draw a WASD key combination or arrow key combination in another location on the paper. The user may then operate the keys with one hand and the joystick with the other.

The process return also allows the user to augment a drawing. In the joystick example, the user might enter a joystick command and add an additional trigger control to the joystick. The computer system will receive the command or may instead recognize that the user is adding to the joystick drawing and then look for a different template to match to the enhanced joystick drawing. With the keyboard, the user may start with only WASD, and then later add a spacebar, shift key or other keys that may be desired for still more functions.

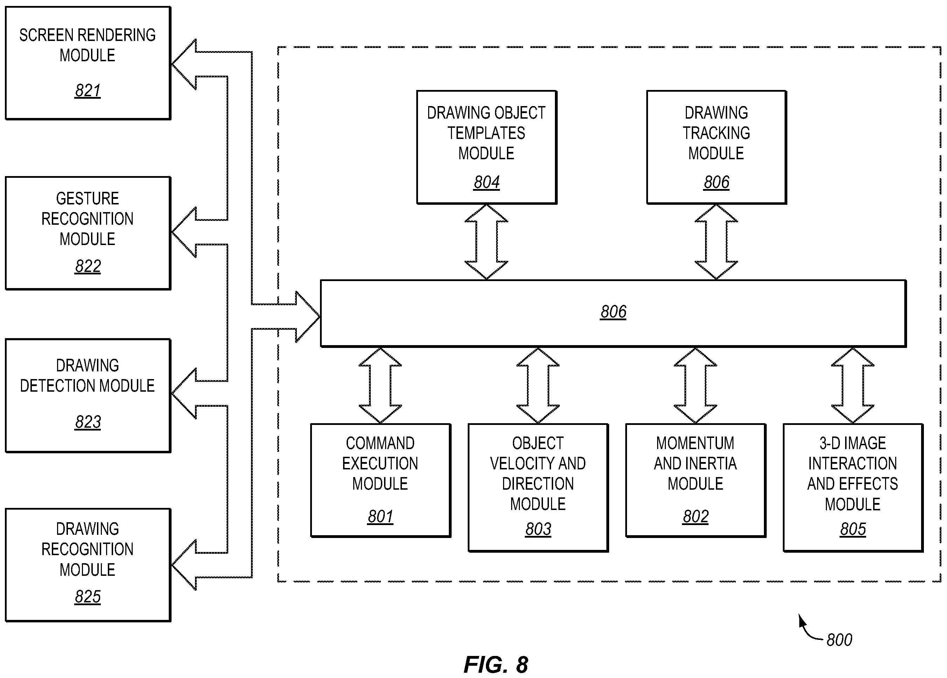

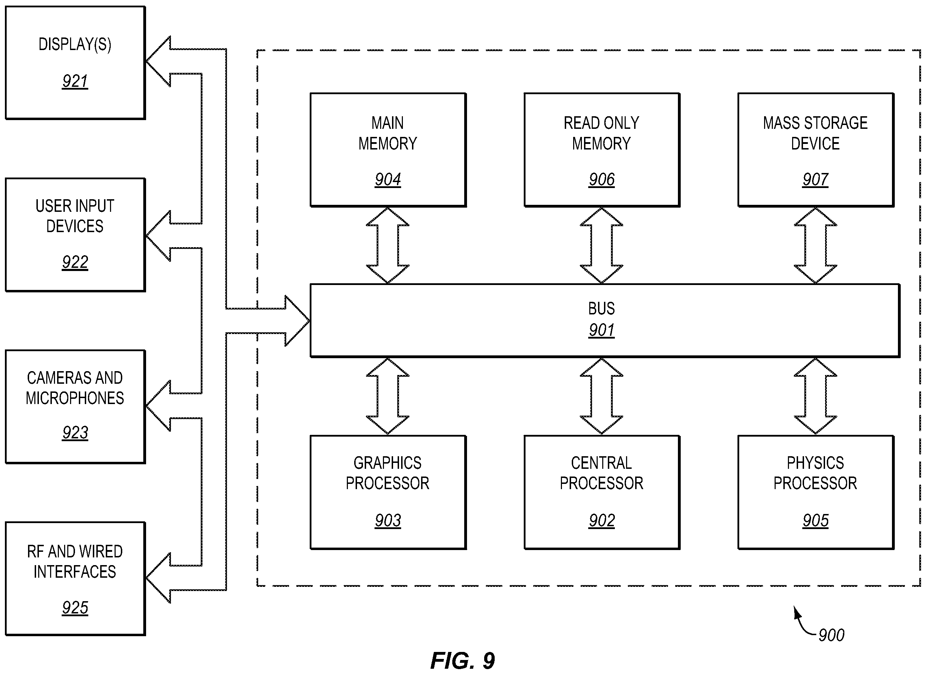

Figure 8 is a block diagram of a computing environment capable of supporting the operations discussed above. The modules and systems can be implemented in a variety of different hardware architectures and form factors including that shown in Figure 9.

The Command Execution Module 801 includes a central processing unit to cache and execute commands and to distribute tasks among the other modules and systems shown. It may include an instruction stack, a cache memory to store intermediate and final results, and mass memory to store applications and operating systems. The Command Execution Module may also serve as a central coordination and task allocation unit for the system.

The Screen Rendering Module 821 draws objects on the one or more multiple screens for the user to see. It can be adapted to receive the data from the Drawing Tracking Module 806, described below, and to render a representation of a drawing on the screen. The screen rendering module also renders interaction between the user and the drawing as commands for the application that the user is operating.

The Gesture Recognition Module 822 may be adapted to recognize and track hand and arm gestures of a user. Such a module may be used to recognize hands, fingers, finger gestures, hand movements and a location of hands relative to drawings. For example, the Gesture Recognition System could for example determine that a user made a body part gesture to push a virtual button on a keyboard, or that the user made a body part gesture to move a virtual control surface of a drawing. The Gesture Recognition System may be coupled to a camera or camera array, a microphone or microphone array, a touch screen or touch surface, or a pointing device, or some combination of these items, to detect gestures and commands from the user.

Any of a variety of techniques for gesture recognition may be used. The system may be used to recognize hands, fingers, finger gestures, hand movements, and locations of hands relative to drawing surfaces. If the gesture intersects a previously drawn and recognized object in a number of predefined ways, this module combines the gesture with the attributes of the matched object to determine an action that the computing system will take. If not, the gesture stands as a pure gesture command. The gesture may then be converted to a command to the computer system for execution by the command execution module 801.

The Drawing Detection Module 823 may be equipped with cameras or other sensors to track the position or orientation of a user's hands or a pen. Alternatively, a touch screen or touch surface of the Drawing Detection Module may include a touch screen sensor. Data from the sensor may be fed to hardware, software, firmware or a combination of the same to map the touch gesture of a user's hand on the screen or surface to a corresponding drawing or image. A drawn input can be assumed to be complete when the user pauses or when the user takes an explicit action such as a gesture or voice command.

The Drawing Recognition Module 825 recognizes drawn and written input. It interprets drawn input by matching portions of drawings to template objects stored in the computing device. This module may be initiated to match against the entire library of templates, or it can use other visual input or a user command to cause the match against a subset of the library. The Drawing Recognition Module may also include keystone correction. When images are captured at an angle, they must be corrected for the distortion caused by the angular view before matching against the template library. The keystone correction may be aided by knowledge about the position of the camera and of the writing surface. For the notebook computer example shown, the computer can be configured with a value for the approximate height of a camera at the top of the screen bezel from the bottom of the case resting on the desk. This value is determined by the design of the case and will be the same for each computer with the same case.

The Drawing Object Templates Module 804 stores templates of input devices such as keypads, touchpads, and command buttons. When a user draws an input device with matching characteristics, the attributes of the template will determine the behavior of the drawing and whether user interaction will affect it.

The Drawing Tracking Module 806 tracks the development of a complex drawing in stages and layers. When a user adds elements of a complex object in stages, this module will determine the delta between the current and previous drawn input. If a drawing has moved in relation to the computing device, this module will determine the new orientation to allow continuous input despite the drawing being moved.

The Object and Velocity and Direction Module 803 may be adapted to estimate the dynamics of a drawing being moved as a virtual object, such as its trajectory, velocity (whether linear or angular), momentum (whether linear or angular), etc. by receiving input from the Drawing Tracker Module 806. The Object and Velocity and Direction Module may further be adapted to estimate dynamics of any physics forces, by for example estimating the acceleration, deflection, etc. of a user gesture. The Object and Velocity and Direction Module may also use image motion, size and angle changes to estimate the velocity of objects, such as the velocity of hands and fingers

The Momentum and Inertia Module 802 allows a variety of "physics" behaviors based on user input. Fast or slow scrolling or swiping may be attributed with momentum for example. This module would have physics templates that match to user gestures and drawings to add behaviors such as acceleration of an object onscreen. It can use drawing motion and user motion in the plane of the drawing sheet or in a three-dimensional space to estimate the velocity and direction of virtual objects related to the drawing The Momentum and Inertia Module is coupled to the Object and Gesture Recognition System 822 to estimate the velocity of gestures performed by hands, fingers, and other body parts and then to apply those estimates to determine momentum and velocities to virtual objects that are to be affected by the gesture.

The 3-D Image Interaction and Effects Module 805 tracks user interaction with 3-D images that appear to extend out of one or more screens. The influence of objects in the z-axis (towards and away from the plane of the screen) can be calculated together with the relative influence of these objects upon each other. For example, an object thrown by a user gesture can be influenced by 3-D objects in the foreground before the virtual object arrives at the plane of the screen. These objects may change the direction or velocity of the projectile or destroy it entirely. The object can be rendered by the 3-D Image Interaction and Effects Module in the foreground on one or more of the displays.

Described in greater detail in association with Figure 7, the computing system of Figure 8 operates with the initiation of the Drawing Detection Module 823. It is initiated through the launching of an application or by other user input such as a voice command. The user creates a drawing and then indicates (as described above) that the drawn input is complete. The Drawing Recognition Module 825 matches the drawing against the template library. When a match of some level of certainty, which may vary by application, is reached, the Drawing Tracking Module 806 associates the drawing with a set of attributes. -If the user subsequently gestures on a matched drawing, the system carries out a command according to the matching set of attributes.

Figure 9 is a block diagram of a computing system, such as a personal computer, gaming console, smartphone or portable gaming device. The computer system 900 includes a bus or other communication means 901 for communicating information, and a processing means such as a microprocessor 902 coupled with the bus 901 for processing information. The computer system may be augmented with a graphics processor 903 specifically for rendering graphics through parallel pipelines and a physics processor 905 for calculating physics interactions as described above. These processors may be incorporated into the central processor 902 or provided as one or more separate processors.

The computer system 900 further includes a main memory 904, such as a random access memory (RAM) or other dynamic data storage device, coupled to the bus 901 for storing information and instructions to be executed by the processor 902. The main memory also may be used for storing temporary variables or other intermediate information during execution of instructions by the processor. The computer system may also include a nonvolatile memory 906, such as a read only memory (ROM) or other static data storage device coupled to the bus for storing static information and instructions for the processor.

A mass memory 907 such as a magnetic disk, optical disc, or solid state array and its corresponding drive may also be coupled to the bus of the computer system for storing information and instructions. The computer system can also be coupled via the bus to a display device or monitor 921, such as a Liquid Crystal Display (LCD) or Organic Light Emitting Diode (OLED) array, for displaying information to a user. For example, graphical and textual indications of installation status, operations status and other information may be presented to the user on the display device, in addition to the various views and user interactions discussed above.

Typically, user input devices, such as a keyboard with alphanumeric, function, and other keys, may be coupled to the bus for communicating information and command selections to the processor. Additional user input devices may include a cursor control input device such as a mouse, a trackball, a trackpad, or cursor direction keys can be coupled to the bus for communicating direction information and command selections to the processor and to control cursor movement on the display 921.

Camera and microphone arrays 923 are coupled to the bus to observe gestures, record audio and video and to receive visual and audio commands as mentioned above.

Communications interfaces 925 are also coupled to the bus 901. The communication interfaces may include a modem, a network interface card, or other well known interface devices, such as those used for coupling to Ethernet, token ring, or other types of physical wired or wireless attachments for purposes of providing a communication link to support a local or wide area network (LAN or WAN), for example. In this manner, the computer system may also be coupled to a number of peripheral devices, other clients or control surfaces or consoles, or servers via a conventional network infrastructure, including an Intranet or the Internet, for example.

It is to be appreciated that a lesser or more equipped system than the example described above may be preferred for certain implementations. Therefore, the configuration of the exemplary systems 800 and 900 will vary from implementation to implementation depending upon numerous factors, such as price constraints, performance requirements, technological improvements, or other circumstances.

Embodiments may be implemented as any or a combination of: one or more microchips or integrated circuits interconnected using a parentboard, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments of the present invention. A machine-readable medium may include, but is not limited to, floppy diskettes, optical disks, CD-ROMs (Compact Disc-Read Only Memories), and magneto-optical disks, ROMs (Read Only Memories), RAMs (Random Access Memories), EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection). Accordingly, as used herein, a machine-readable medium may, but is not required to, comprise such a carrier wave.

References to "one embodiment", "an embodiment", "example embodiment", "various embodiments", etc., indicate that the embodiment(s) of the invention so described may include particular features, structures, or characteristics, but not every embodiment necessarily includes the particular features, structures, or characteristics. Further, some embodiments may have some, all, or none of the features described for other embodiments.

In the following description and claims, the term "coupled" along with its derivatives, may be used. "Coupled" is used to indicate that two or more elements co-operate or interact with each other, but they may or may not have intervening physical or electrical components between them.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. A method comprising:
determining by a computer system (100) a status of the computer system, said status indicating a type of drawing;
accessing a library of drawing templates associated with the drawing type;
observing by a computer system a drawing drawn by a user (112; 122; 132; 155);
comparing the observed drawing to the drawing templates in the library;
if a drawing template of the drawing templates matches the observed drawing, assigning attributes to the drawing; if a user gesture is recognized relative to the drawing, carrying out a command according to the attributes assigned to the drawing.

2. The method of Claim 1, wherein determining a status comprises determining one of an installed hardware status, an active program status, and a background program status.

3. The method of Claim 1 or 2, wherein the type of drawing is a type of a user input device.

4. The method of Claim 1, further comprising loading a plurality of drawing templates for use with a loaded application, wherein determining a status comprises determining that the loaded application is active, and wherein accessing a library comprises accessing the loaded plurality of drawing templates for the active application.

5. The method of Claim 4, wherein the drawing templates in the library correspond to different configurations and types of user input devices, for example a keypad (130), a gaming controller, or a touch surface.

6. The method of any one or more of the above claims, wherein observing a drawing drawn by a user (112; 122; 132; 155) comprises capturing an image of the drawing using a camera (102) coupled to the computer system (100).

7. The method of Claim 6, further comprising correcting the captured image for distortions caused by the relative position of the camera (102) and the drawing.

8. The method of any one or more of the above claims, wherein assigning attributes comprises assigning control surfaces to the drawing or assigning keys (140) to parts of the drawing.

9. An apparatus comprising means for performing the method of any one or more of the above claims.

10. A computer-readable medium having instructions thereon that, when operated on by the computer, cause the computer to perform operations comprising:
determining by a computer system (100) a status of the computer system, said status indicating a type of drawing;
accessing a library of drawing templates associated with the drawing type;
observing by a computer system a drawing drawn by a user (112; 122; 132; 155);
comparing the observed drawing to the drawing templates in the library;
if a drawing template of the drawing templates matches the observed drawing, assigning attributes to the drawing; if a user gesture is recognized relative to the drawing, carrying out a command according to the attributes assigned to the drawing.

11. The medium of Claim 10, wherein determining a status comprises determining one of an installed hardware status, an active program status, and a background program status.

12. The medium of Claim 10 or 11, wherein accessing a library comprises selecting one from among a plurality of different libraries of drawing templates based on the drawing type.

13. A system (800) comprising:
a command execution module (801) to determine at a computer system a status of the computer system indicating a type of drawing;
a drawing detection module (823) to observe a drawing drawn by a user (112; 122; 132; 155);
a drawing object templates module (804) to access a library of drawing templates associated with the drawing type, to compare the observed drawing to drawing templates in the library, and, if a drawing template of the drawing templates matches the observed drawing, to assign attributes to the identified drawing; and
a gesture recognition module (822) to recognize a user gesture associated with the drawing as a command and to send the command to the command execution module (801) for execution.

14. The system (800) of Claim 13, further comprising a camera (923) to capture an image of the drawing for use by the drawing detection module (823).

## Patentansprüche

1. Verfahren, umfassend:
Bestimmen durch ein Computersystem (100) eines Status des Computersystems, wobei der Status einen Zeichnungstyp angibt;
Zugreifen auf eine Bibliothek von Zeichnungsvorlagen, die dem Zeichnungstyp zugeordnet sind;
Beobachten durch ein Computersystem einer Zeichnung, die von einem Benutzer (112; 122; 132; 155) gezeichnet wird;
Vergleichen der beobachteten Zeichnung mit den Zeichnungsvorlagen in der Bibliothek;
wenn eine Zeichnungsvorlage der Zeichnungsvorlagen mit der beobachteten Zeichnung übereinstimmt, Zuweisen von Attributen zu der Zeichnung;
wenn eine Benutzergeste in Bezug auf die Zeichnung erkannt wird, Ausführen eines Befehls gemäß den Attributen, die der Zeichnung zugeordnet wurden.

2. Verfahren nach Anspruch 1, wobei das Bestimmen eines Status das Bestimmen eines aus einem Status einer installierten Hardware, einem Status eines aktiven Programms und einem Status eines Hintergrundprogramms umfasst.

3. Verfahren nach Anspruch 1 oder 2, wobei der Zeichnungstyp ein Typ einer Benutzereingabevorrichtung ist.

4. Verfahren nach Anspruch 1, ferner umfassend das Laden von mehreren Zeichnungsvorlagen zur Verwendung mit einer geladenen Anwendung, wobei das Bestimmen eines Status das Bestimmen umfasst, dass die geladene Anwendung aktiv ist, und wobei das Zugreifen auf eine Bibliothek das Zugreifen auf die mehreren geladenen Zeichnungsvorlagen für die aktive Anwendung umfasst.

5. Verfahren nach Anspruch 4, wobei die Zeichnungsvorlagen in der Bibliothek unterschiedlichen Konfigurationen und Typen von Benutzereingabevorrichtungen entsprechen, zum Beispiel einer Tastatur (130), einem Spiele-Controller oder einer Touch-Oberfläche.

6. Verfahren nach einem oder mehreren der vorhergehenden Ansprüche, wobei das Beobachten einer von einem Benutzer (112; 122; 132; 155) gezeichneten Zeichnung das Erfassen eines Bildes der Zeichnung mittels einer Kamera (102), die mit dem Computersystem (100) verbunden ist, umfasst.

7. Verfahren nach Anspruch 6, ferner umfassend das Korrigieren des erfassten Bildes auf Verzerrungen, die durch die relative Position der Kamera (102) zur Zeichnung hervorgerufen werden.

8. Verfahren nach einem oder mehreren der vorhergehenden Ansprüche, wobei das Zuweisen von Attributen das Zuweisen von Steuerflächen zu der Zeichnung oder das Zuweisen von Schlüsseln (140) zu Teilen der Zeichnung umfasst.

9. Gerät, umfassend Einrichtungen zum Durchführen des Verfahrens nach einem oder mehreren der vorhergehenden Ansprüche.

10. Computerlesbares Medium mit darauf befindlichen Anweisungen, die, wenn sie auf dem Computer ausgeführt werden, bewirken, dass der Computer Operationen durchführt, umfassend:
Bestimmen durch ein Computersystem (100) eines Status des Computersystems, wobei der Status einen Zeichnungstyp angibt;
Zugreifen auf eine Bibliothek von Zeichnungsvorlagen, die dem Zeichnungstyp zugeordnet sind;
Beobachten durch ein Computersystem einer Zeichnung, die von einem Benutzer (112; 122; 132; 155) gezeichnet wird;
Vergleichen der beobachteten Zeichnung mit den Zeichnungsvorlagen in der Bibliothek;
wenn eine Zeichnungsvorlage der Zeichnungsvorlagen mit der beobachteten Zeichnung übereinstimmt, Zuweisen von Attributen zu der Zeichnung;
wenn eine Benutzergeste in Bezug auf die Zeichnung erkannt wird, Ausführen eines Befehls gemäß den Attributen, die der Zeichnung zugeordnet wurden.

11. Medium nach Anspruch 10, wobei das Bestimmen eines Status das Bestimmen eines aus einem Status einer installierten Hardware, einem Status eines aktiven Programms und einem Status eines Hintergrundprogramms umfasst.

12. Medium nach Anspruch 10 oder 11, wobei das Zugreifen auf eine Bibliothek das Auswählen einer aus mehreren unterschiedlichen Bibliotheken von Zeichnungsvorlagen basierend auf dem Zeichnungstyp umfasst.

13. System (800), umfassend:
ein Befehlsausführungsmodul (801), um in einem Computersystem einen Status des Computersystems zu bestimmen, der einen Zeichnungstyp angibt;
ein Zeichnungserkennungsmodul (823), um eine von einem Benutzer (112; 122; 132; 155) gezeichnete Zeichnung zu beobachten;
ein Zeichnungsobjektvorlagenmodul (804) zum Zugreifen auf eine Bibliothek von Zeichnungsvorlagen, die dem Zeichnungstyp zugeordnet sind, um die beobachtete Zeichnung mit Zeichnungsvorlagen in der Bibliothek zu vergleichen, und
wenn eine Zeichnungsvorlage der Zeichnungsvorlagen mit der beobachteten Zeichnung übereinstimmt, Zuweisen von Attributen zu der identifizierten Zeichnung; und
ein Gestenerkennungsmodul (822), um eine Benutzergeste, die der Zeichnung zugeordnet ist, als einen Befehl zu erkennen und den Befehl an das Befehlsausführungsmodul (801) zur Ausführung zu senden.

14. System (800) nach Anspruch 13, ferner umfassend eine Kamera (923) zum Erfassen eines Bildes der Zeichnung zur Verwendung durch das Zeichnungserfassungsmodul (823).

## Revendications

1. Procédé, comprenant :
la détermination, par un système d'ordinateur (100), d'un statut du système d'ordinateur, ledit statut indiquant un type de dessin ;
l'accès à une bibliothèque de modèles de dessin associés au type de dessin ;
l'observation, par un système d'ordinateur, d'un dessin dessiné par un utilisateur (112 ; 122 ; 132 ; 155) ;
la comparaison du dessin observé aux modèles de dessin dans la bibliothèque ;
si un modèle de dessin des modèles de dessin correspond au dessin observé, l'attribution d'attributs au dessin ;
si un geste utilisateur est reconnu par rapport au dessin, l'exécution d'une commande selon les attributs attribués au dessin.

2. Procédé selon la revendication 1, dans lequel la détermination d'un statut comprend la détermination de l'un parmi un statut de matériel installé, un statut de programme actif, et un statut de programme d'arrière-plan.

3. Procédé selon la revendication 1 ou 2, dans lequel le type de dessin est un type d'un dispositif d'entrée utilisateur.

4. Procédé selon la revendication 1, comprenant en outre le chargement d'une pluralité de modèles de dessin pour l'utilisation avec une application chargée, dans lequel la détermination d'un statut comprend la détermination que l'application chargée est active, et dans lequel l'accès à une bibliothèque comprend l'accès à la pluralité chargée de modèles de dessin pour l'application active.

5. Procédé selon la revendication 4, dans lequel les modèles de dessin dans la bibliothèque correspondent à différentes configurations et différents types de dispositifs d'entrée utilisateur, par exemple un clavier (130), un contrôleur de jeu, ou une surface tactile.

6. Procédé selon l'une ou plusieurs quelconques des revendications précédentes, dans lequel l'observation d'un dessin dessiné par un utilisateur (112 ; 122 ; 132 ; 155) comprend la capture d'une image du dessin en utilisant un appareil de capture d'image (102) couplé au système d'ordinateur (100).

7. Procédé selon la revendication 6, comprenant en outre la correction, dans l'image capturée, de distorsions causées par la position relative de l'appareil de capture d'image (102) et du dessin.

8. Procédé selon l'une ou plusieurs quelconques des revendications précédentes, dans lequel l'attribution d'attributs comprend l'attribution de surfaces de contrôle au dessin ou l'attribution de touches (140) à des parties du dessin.

9. Appareil comprenant des moyens pour réaliser le procédé selon l'une ou plusieurs quelconques des revendications précédentes.

10. Support lisible par ordinateur possédant des instructions sur celui-ci qui, lorsqu'elles implémentées par l'ordinateur, font en sorte que l'ordinateur réalise des opérations comprenant :
la détermination, par un système d'ordinateur (100), de un statut du système d'ordinateur, ledit statut indiquant un type de dessin ;
l'accès à une bibliothèque de modèles de dessin associés au type de dessin ;
l'observation, par un système d'ordinateur, d'un dessin dessiné par un utilisateur (112 ; 122 ; 132 ; 155) ;
la comparaison du dessin observé aux modèles de dessin dans la bibliothèque ;
si un modèle de dessin des modèles de dessin correspond au dessin observé, l'attribution d'attributs au dessin ;
si un geste utilisateur est reconnu par rapport au dessin, l'exécution d'une commande selon les attributs attribués au dessin.

11. Support selon la revendication 10, dans lequel la détermination d'un statut comprend la détermination de l'un parmi un statut de matériel installé, un statut de programme actif, et un statut de programme d'arrière-plan.

12. Support selon la revendication 10 ou 11, dans lequel l'accès à une bibliothèque comprend la sélection d'une parmi une pluralité de différentes bibliothèques de modèles de dessin sur la base du type de dessin.

13. Système (800), comprenant :
un module d'exécution de commande (801) pour déterminer, dans un système d'ordinateur, un statut du système d'ordinateur indiquant un type dessin ;
un module de détection de dessin (823) pour observer un dessin dessiné par un utilisateur (112 ; 122 ; 132 ; 155) ;
un module de modèles d'objet de dessin (804) pour accéder à une bibliothèque de modèles de dessin associés au type de dessin, pour comparer le dessin observé à des modèles de dessin dans la bibliothèque, et, si un modèle de dessin des modèles de dessin correspond au dessin observé, pour attribuer des attributs au dessin identifié ; et
un module de reconnaissance de geste (822) pour reconnaître un geste utilisateur associé au dessin en tant que commande et pour envoyer la commande au module d'exécution de commande (801) pour l'exécution.

14. Système (800) selon la revendication 13, comprenant en outre un appareil de capture d'image (923) pour capturer une image du dessin pour l'utilisation par le module de détection de dessin (823).
